# EUROPÄISCHE PATENTSCHRIFT

(11) **EP 0 939 861 B1**
(45) Veröffentlichungstag und Bekanntmachung des Hinweises auf die Patenterteilung: **26.04.2000**
(21) Anmeldenummer: 98925492.5
(22) Anmeldetag: 28.04.1998
(51) Int. Cl.: F04B 43/04, F15C 5/00

(54) **VERFAHREN ZUM HERSTELLEN EINES MIKROMEMBRANPUMPENKÖRPERS**
METHOD FOR PRODUCING A MICROMEMBRANE PUMP BODY
PROCEDE DE PRODUCTION D'UN CORPS DE POMPE A MICROMEMBRANE

(30) Priorität: 12.05.1997 DE 19719861
(43) Veröffentlichungstag der Anmeldung: 08.09.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: LINNEMANN, Reinhard, D-72076 Tübingen (DE); RICHTER, Martin, D-81677 München (DE); KLUGE, Stefan, D-80992 München (DE); WOIAS, Peter, D-81735 München (DE)
(74) Vertreter: Schoppe, Fritz, Dipl.-Ing.
(86) Internationale Anmeldenummer: EP9802506
(87) Internationale Veröffentlichungsnummer: WO9851928

(56) Entgegenhaltungen:
- EP-A- 0 518 524
- EP-A- 0 703 364
- WO-A-97/28376
- DE-A- 4 143 343
- US-A- 4 826 131

## Beschreibung

Die vorliegende Erfindung bezieht sich auf ein Verfahren zum Herstellen eines Pumpenkörpers und insbesondere auf ein Verfahren zum Herstellen eines Pumpenkörpers für eine Mikromembranpumpe, die eine Pumpenmembran, einen Pumpenkörper und mit passiven Rückschlagventilen versehene Einlaß- und Auslaßöffnungen aufweist.

Gemäß dem Stand der Technik existiert eine Vielzahl unterschiedlicher Mikromembranpumpen, wobei als Antriebskonzepte überwiegend elektromagnetische, thermische und piezoelektrische Antriebsprinzipien eingesetzt werden. Elektromagnetische Antriebskonzepte für mit Rückschlagventilen versehene Mikromembranpumpen sind beispielsweise bei E. Quandt, K. Seemann, *Magnetostrictive Thin Film Microflow Devices,* Micro System Technologies 96, S. 451-456, VDE-Verlag GmbH, 1996, beschrieben.

Thermische Antriebskonzepte sind beispielsweise bei B. Büstgens u.a., *Micromembrane Pump Manufactured by Molding,* Proc. Actuator 94; Bremen 1994, S. 86-90, dargelegt. In der EP-A-0134614 und bei H.T.G. Van Lintel u.a., A *Piezoelectric Micropump Based on Micromaching of Silicon,* Sensors&Actuators, 15, 1988, S. 153-167, sind piezoelektrische Antriebsprinzipien für Mikromembranpumpen, die aktive oder passive Rückschlagventile verwenden, erläutert.

Eine bekannte Mikromembranpumpe mit einem elektrostatischen Antrieb, die einen Pumpkörper aufweist, in den eine Einlaß- und eine Auslaß-Öffnung integriert sind, die jeweils mit Rückschlagventilen versehen sind, ist bei R. Zengerle: *Mikromembranpumpen als Komponenten für Mikro-Fluidsysteme;* Verlag Shaker; Aachen 1994; ISBN 3-8265-0216-7, sowie der DE 41 43 343 A1 beschrieben. Eine derartige Mikropumpe ist in Fig. 1 dargestellt.

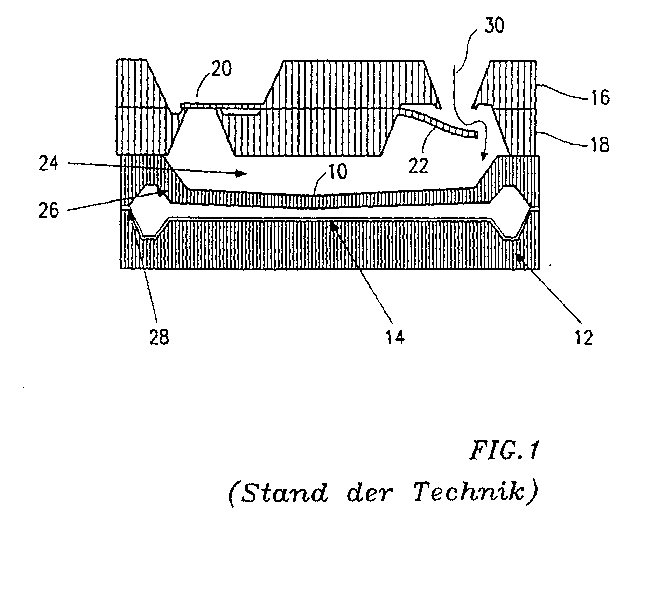

Die in Fig. 1 gezeigte Mikropumpe besteht aus vier Siliziumchips, wobei zwei der Chips den elektrostatischen Aktor, der aus einer flexiblen Pumpmembran 10 und einer Gegenelektrode 12, die mit einer Isolationsschicht 14 versehen ist, besteht, bilden. Die beiden anderen Siliziumchips 16 und 18 definieren einen Pumpenkörper, in dem Klappenventile 20 und 22 angeordnet sind. Zwischen dem Pumpenkörper, der durch die Siliziumchips 16 und 18 gebildet ist, und der flexiblen Pumpmembran 10, die umfangsmäßig mit dem Pumpenkörper verbunden ist, ist eine Pumpkammer 24 gebildet. Zwischen den Aufhängungsvorrichtungen 26 der flexiblen Pumpmembran 10 und der Gegenelektrode ist eine Abstandsschicht 28 angeordnet.

Bei Anlegen einer elektrischen Spannung an den elektrostatischen Aktor findet eine elektrostatische Anziehung der elastischen Pumpmembran 10 an die starre Gegenelektrode 12 statt, wodurch ein Unterdruck in der Pumpkammer 24 erzeugt wird, der zum Einströmen des Pumpmediums über das Einlaßklappenventil 22 führt, siehe Pfeil 30. Nach dem Abschalten der Spannung und einem Ladungsausgleich durch Kurzschluß der Elektroden relaxiert die Pumpenmembran und verdrängt das Pumpmedium über das Auslaßklappenventil 20 aus der Pumpkammer.

Mit Ausnahme der unterschiedlichen Antriebseinrichtung könnte auch eine piezoelektrisch betriebene Mikropumpe ebenfalls den in Fig. 1 beschriebenen Aufbau des Mikropumpenkörpers aufweisen.

In der DE 694 01 250 C2 sind Verfahren zum Herstellen einer Mikropumpe beschrieben, bei denen eine Siliziumplatte mit in derselben gebildeten Ventilstrukturen mit einer Abschlußplatte verbunden wird.

Die Aufgabe der vorliegenden Erfindung besteht darin, ein einfaches Verfahren zum Herstellen eines Pumpenkörpers auf Wafer-Ebene ermöglicht, wobei das Verfahren ferner die Herstellung eines Pumpenkörpers ermöglicht, der zur Herstellung einer Mikromembranpumpe mit einem hohen Kompressionsverhältnis geeignet ist.

Diese Aufgabe wird durch ein Verfahren gemäß Anspruch 1 gelöst.

Die vorliegende Erfindung schafft ein Verfahren zum Herstellen eines Pumpenkörpers mit einer mit einem Einlaßventil versehenen Einlaßöffnung und einer mit einem Auslaßventil versehenen Auslaßöffnung. Zunächst wird jeweils eine erste Hauptoberfläche einer ersten und zweiten Halbleiterscheibe zur Festlegung einer Ventilklappenstruktur des Einlaßventils und einer Ventilsitzstruktur des Auslaßventils in der ersten Scheibe und einer Ventilklappenstruktur des Auslaßventils und einer Ventilsitzstruktur des Einlaßventils in der zweiten Scheibe strukturiert. Nachfolgend wird jeweils eine Ventilklappenwannenstruktur und eine Ventilöffnungswannenstruktur in einer vorbestimmten Beziehung zu den Ventilklappenstrukturen und den Ventilsitzstrukturen in jeweils einer zweiten Hauptoberfläche der ersten und der zweiten Halbleiterscheibe gebildet. Die ersten Hauptoberflächen der ersten und der zweiten Halbleiterscheibe werden derart verbunden, daß die jeweils eine Ventilklappenstruktur zu einer Ventilsitzstruktur eine vorbestimmte Beziehung aufweist. Abschließend werden die jeweils zweiten Hauptoberflächen der ersten und der zweiten Halbleiterscheibe zumindest im Bereich der Ventilklappenwannenstruktur und der Ventilöffnungswannenstruktur zum Freilegen der Ventilklappen und zum Öffnen der Ventilsitze geätzt.

Die vorstehend beschriebenen elektrostatisch angetriebenen Mikromembranpumpen weisen in der Form, die beispielsweise in Fig. 1 dargestellt ist, eine Mehrzahl von Nachteilen auf.

Bedingt durch den geringen Hub der Mikromembran und das vergleichsweise große Pumpkammervolumen weist eine solche bekannte Pumpe ein sehr geringes Kompressionsverhältnis auf. Als Kompressionsverhältnis wird das Verhältnis des verdrängten Pumpvolumens zu dem gesamten Pumpkammervolumen bezeichnet. Durch dieses geringe Kompressionsverhältnis ist eine Förderung kompressibler Medien, wie z.B. von Gasen, nicht möglich, da die Kompressibilität solcher Medien in der Regel über dem Kompressionsverhältnis der Pumpe liegt.

Ferner weist die Pumpkammer der beschriebenen bekannten Pumpen eine ungünstige strömungstechnische, sowie nicht blasentolerante Geometrie auf. Lufteinschlüsse in einem flüssigen Pumpmedium sammeln sich in der Pumpkammer und verschlechtern durch ihre vergleichsweise hohe Kompressibilität die Pumpeigenschaften erheblich. Ferner ist aufgrund des schlechten Kompressionsverhaltens ein selbstansaugendes Verhalten nicht zu erzielen.

Bei den bekannten Mikropumpen steht durch den verwendeten Herstellungsprozeß die Pumpmembran ferner in elektrischem Kontakt mit dem geförderten Medium. Da bei einer elektrostatisch angetriebenen Mikropumpe im Betrieb Spannungen in der Größenordnung von 200 V am Aktor auftreten, können im Störfall erhebliche elektrische Potentiale am Pumpmedium anliegen, die je nach Anwendung zu Störungen externer Komponenten führen können. Ferner werden bekannte Mikropumpen beim derzeitigen Stand der Technik durch Kleben einzelner Chips montiert, wobei diese Montage nicht den Anforderungen an eine rationelle Fertigung genügt.

Es wären daher Mikromembranpumpen mit einem reduzierten Pumpkammervolumen vorteilhaft, um die oben genannten Nachteile auszuräumen. Eine Möglichkeit zur Reduzierung des Pumpkammervolumens würde in dem Dünnen des der Antriebseinrichtung zugewandten Ventilchips bestehen. Jedoch ist gerade das Dünnen derartiger Ventilchips mit ganz erheblichen Problemen verbunden. Zum einen führt ein mechanisches Dünnen, beispielsweise ein Schleifen oder Polieren, aufgrund der dabei auftretenden starken Vibrationen unter Umständen zur Beschädigung der Klappe, d.h. die Ventilklappe kann an ihrem Einspannpunkt abbrechen. Ferner scheidet ein chemischer Prozeß zum Abdünnen des Ventilchips ebenfalls aus, da die bestehenden Ventilklappen gegenüber dem chemischen Abtrag geschützt werden müssen, was prozeßtechnisch nur mit sehr hohem Aufwand möglich ist.

Das Verfahren gemäß der vorliegenden Erfindung ermöglicht ein solches Dünnen des Ventilchips, ohne die Gefahr einer Beschädigung der empfindlichen Ventilklappen und ohne einen hohen prozeßtechnischen Aufwand.

Ferner ermöglicht das erfindungsgemäße Verfahren die Fertigung der Pumpenkörper auf Waferebene, wobei die gefertigten Pumpenkörper aufgrund des stapelförmigen Aufbaus ferner für eine Endmontage einer Mikromembranpumpe auf Waferebene geeignet sind, was ein im Vergleich zu zahlreichen anderen Konzepten ein fertigungstechnisch sehr günstiges Konzept darstellt.

Weiterbildungen der vorliegenden Anmeldung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: eine bekannte Mikromembranpumpe mit einem elektrostatischen Antrieb;
- Fig. 2a) ,2b), 3a) und 3b): Mikromembranpumpen mit Pumpenkörpern, die nach erfindungsgemäßen Verfahren hergestellt wurden;
- Fig. 4: einen elektrostatischen Mikropumpenantrieb für eine Mikromembranpumpe;
- Fig. 5: einen piezoelektrischen Mikropumpenantrieb für eine Mikromembranpumpe;
- Fig. 6: schematische Querschnittdarstellungen zur Erläuterung eines ersten Ausführungsbeispiels des erfindungsgemäßen Verfahrens;
- Fig. 7: schematische Querschnittdarstellungen zur Erläuterung eines zweiten Ausführungsbeispiels des erfindungsgemäßen Verfahrens; und
- Fig. 8: schematische Querschnittdarstellungen zur Erläuterung eines dritten Ausführungsbeispiels des erfindungsgemäßen Verfahrens.

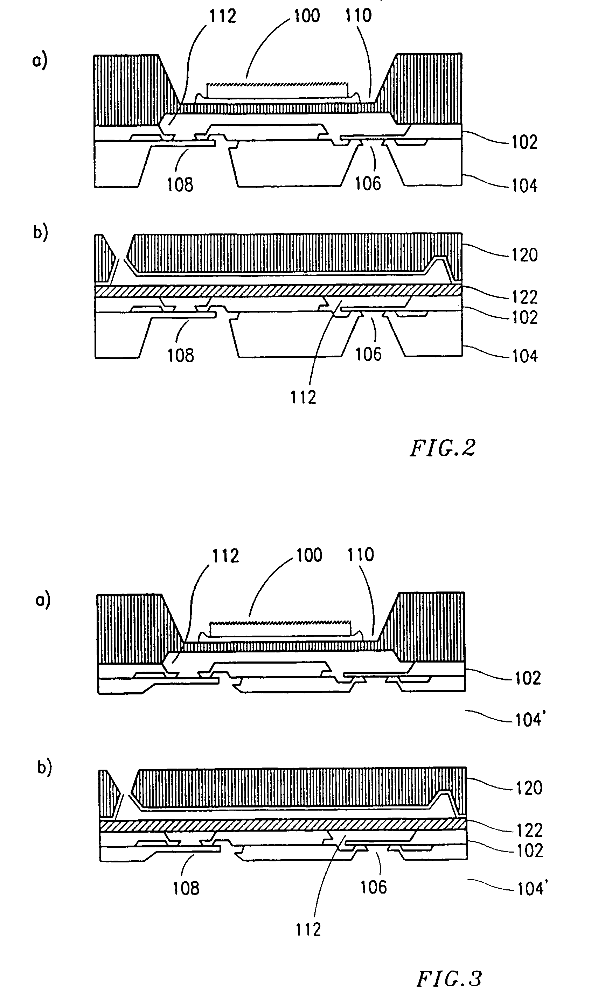

In den Fig. 2a), 2b), 3a) sowie 3b) sind Ausführungsbeispiele von Mikromembranpumpen dargestellt, deren Pumpenkörper mit dem erfindungsgemäßen Verfahren hergestellt wurde.

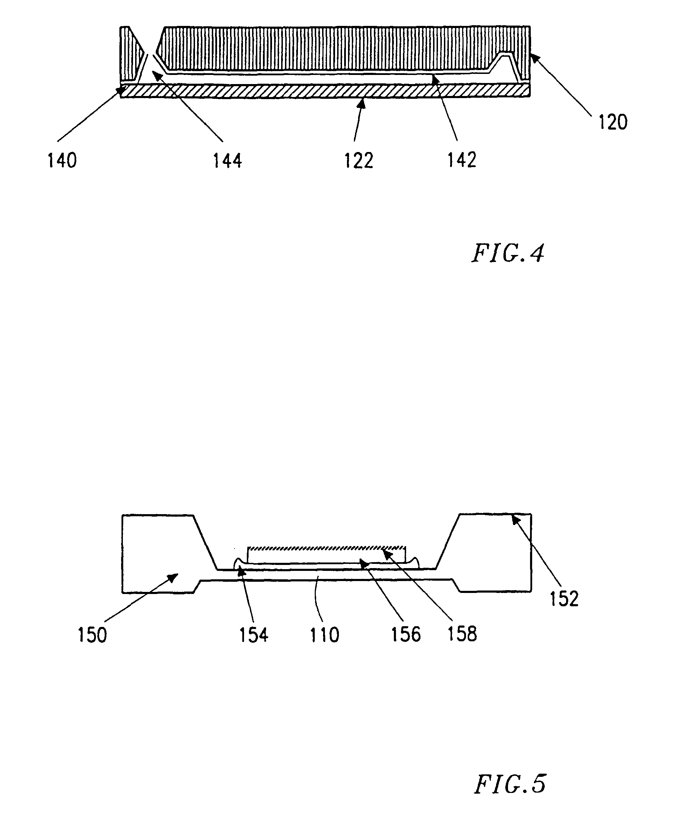

Fig. 2a) zeigt eine Mikromembranpumpe auf der Basis eines piezoelektrischen Aktors 100. Der verwendete piezoelektrische Aktor wird nachfolgend bezugnehmend auf Fig. 5 näher erläutert. Ein Pumpenkörper ist durch zwei Halbleiterscheiben, vorzugsweise Siliziumwafer, 102 und 104 gebildet. In den Halbleiterscheiben 102 und 104 sind ein Einlaßventil 106 und ein Auslaßventil 108 mittels mikromechanischer Verfahren gebildet. Wie in Fig. 2a) zu sehen ist, ist dazu das Siliziumsubstrat 102 auf der der Mikromembran zugewandten Oberfläche gedünnt, um die Realisierung eines kleinen Pumpkammervolumens und damit eines hohen Kompressionsverhältnisses zu ermöglichen.

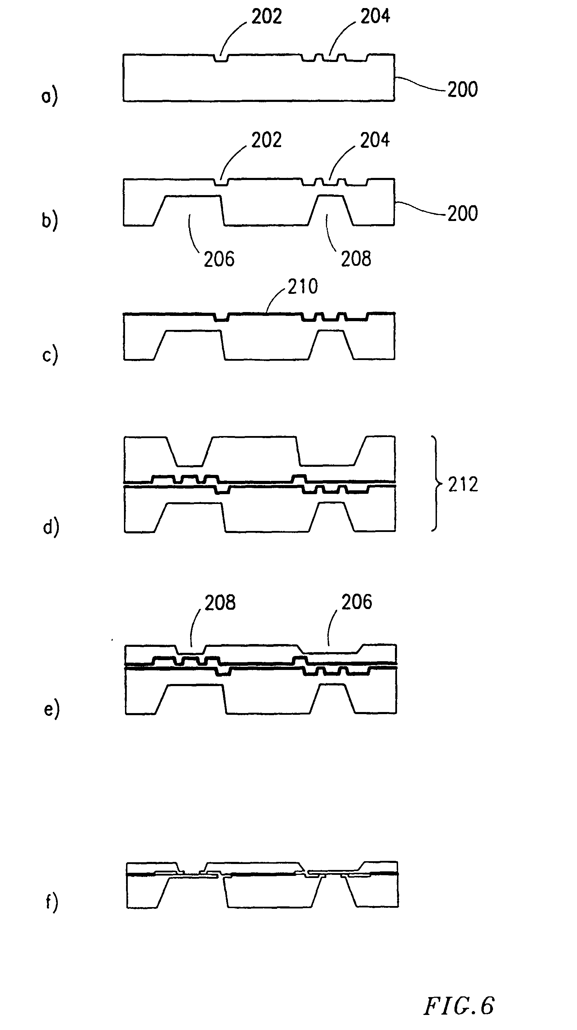

Erfindungsgemäße Verfahren zum Bilden einer solchen Struktur werden später bezugnehmend auf die Fig. 6 - 8 beschrieben.

In Fig. 2b) ist ein Ausführungsbeispiel einer Mikromembranpumpe auf der Basis eines elektrostatischen Antriebs dargestellt. Der elektrostatische Antrieb besteht aus einer Gegenelektrode 120 und einem elektrostatischem Aktor 122, der als Mikromembran dient. Dieser elektrostatische Antrieb wird nachfolgend bezugnehmend auf Fig. 4 näher erläutert.

Ein Pumpenkörper ist wiederum durch zwei Siliziumsubstrate 102 und 104, in denen passive Rückschlagventile 106 und 108 gebildet sind, realisiert. Wie in Fig. 2b) zu sehen ist, ist der elektrostatische Aktor 122, der gleichzeitig als Mikromembran dient, im wesentlichen planar, so daß derselbe in den Bereichen außerhalb der Einlaßöffnung bzw. der Auslaß-öffnung, in denen die Rückschlagventile 106 und 108 gebildet sind, auf dem Pumpenkörper aufliegt. Dadurch sowie durch das Dünnen des Ventilchips kann bei dem elektrostatischen Antrieb ein hohes Kompressionsverhältnis erhalten werden.

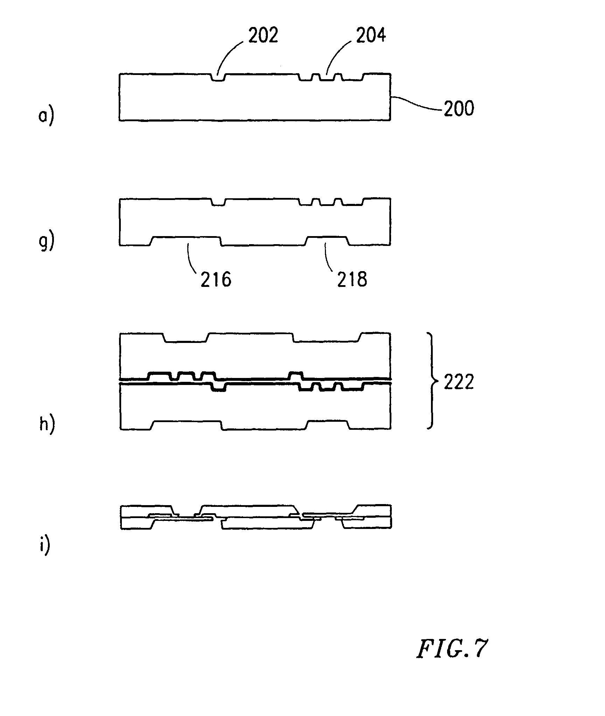

In den Fig. 3a) und 3b) sind zwei weitere Ausführungsbeispiele einer Mikromembranpumpe dargestellt, die sich von den in Fig. 2a) und 2b) dargestellten Ausführungsbeispielen ausschließlich hinsichtlich des zweiten, den Pumpenkörper definierenden Siliziumsubstrats unterscheiden. Bei den in den Fig. 3a) und 3b) dargestellten Ausführungsbeispielen ist auch das zweite Siliziumsubstrat 104', das zusammen mit dem Siliziumsubstrat 102 den Pumpkörper bildet, gedünnt, und zwar auf der von der Mikromembran 122 abgewandten Seite. Ein derartiger Pumpenkörper, wie er in den Fig. 3a) und 3b) dargestellt ist, ergibt sich durch ein Herstellungsverfahren, wie es nachfolgend bezugnehmend auf Fig. 7 erläutert wird.

Fig. 4 zeigt einen planaren elektrostatischen Mikropumpenantrieb, der mit einem Pumpenkörper, der gemäß dem erfindungsgemäßen Verfahren hergestellt wurde, verbunden werden kann, um eine Mikromembranpumpe zu bilden. Der elektrostatische Antrieb unterscheidet sich von dem in Fig. 1 dargestellten Antrieb im wesentlichen durch einen planaren Aktor, der aus einer starren Gegenelektrode 120 und einer ganzflächig dünnen Membran 122 besteht. Somit ist der Anteil des Pumpkammervolumens, der von der Antriebseinheit gebildet wird, auf ein Nullvolumen reduziert, wie in Fig. 2b) zu sehen ist, wodurch sich ein wesentlicher Beitrag zur Kompressionserhöhung ergibt.

Der beschriebene planare elektrostatische Aktor kann beispielsweise mit dem nachfolgend beschriebenen Verfahren hergestellt werden. Zunächst werden Ausgangswafer für die Gegenelektrode 120 und die Pumpmembran 122 hergestellt. Dies beinhaltet insbesondere die Schaffung einer Möglichkeit zur elektrischen Kontaktierung, beispielsweise das Aufbringen von Bondpads, sowie bei elektrisch nicht leitenden Ausgangsmaterialien die Herstellung einer geeignet strukturierten leitfähigen Beschichtung zur Realisierung der Elektrodenflächen, wiederum mit der Möglichkeit der elektrischen Kontaktierung. Nachfolgend wird eine Abstandsschicht 140 an der späteren Montagefläche von Pumpmembran 122 und Gegenelektrode 120 gebildet. Ferner werden Isolationsschichten 142 an allen Berührungsstellen der beiden Wafer gebildet, um einen elektrischen Kurzschluß zwischen den Elektroden zu verhindern. An der Abstandsschicht 140 erfolgt eine strukturierte Verbindung der beiden Ausgangswafer. Im Anschluß wird der Ausgangswafer für die Pumpmembran 122 ganzflächig abgetragen, bis die gewünschte Enddicke der Pumpmembran erreicht ist.

Als Abtragungsverfahren zur Herstellung der flexiblen elektrostatisch angetriebenen Pumpmembran 122 können je nach gewähltem Material ein mechanischer Abtrag, beispielsweise durch Schleifen, oder ein Ätzen verwendet werden. Zur Unterstützung von Ätzprozessen kann die Pumpmembran 122 an ihrer Oberseite als Mehrschichtstruktur ausgeführt sein, die als unterste Lage eine Ätzstopschicht an der späteren Membranunterseite aufweist. Die Herstellung der Pumpmembran erfordert keinen Strukturierungsprozeß, so daß durch einen solchen im wesentlichen planaren elektrostatischen Mikropumpenantrieb neben der Optimierung des Kompressionsverhältnisses eine Minimierung der Herstellungskosten erreicht werden kann.

Eine weitergehende Strukturierung der Unterseite der Pumpmembran, beispielsweise die Herstellung von zusätzlichen Hilfsstrukturen wie Abstandhaltern oder Strömungskanälen, oder das nachträglich Entfernen oder Aufbringen von Beschichtungen kann im Anschluß an das ganzflächige Abtragen erfolgen. Zu dieser weitergehenden Strukturierung gehört beispielsweise das Aufbringen von zusätzlichen Schichten zur Erhöhung der chemischen Beständigkeit, zur elektrischen Isolation oder zur gezielten Einstellung mechanischer Eigenschaften, beispielsweise einer lokal unterschiedlichen Membrandicke zur Erzielung einer lokal inhomogenen Elastizität.

Als Ausgangsmaterialien für die Gegenelektrode 120 und für die Pumpmembran 122 können insbesondere Silizium, Glas oder Kunststoffe verwendet werden. Die Abstandsschicht 140 kann in beliebiger Kombination durch eine Strukturierung oder durch ein additives Aufbringen an einem oder an beiden Ausgangswafern erzeugt werden. Als Verfahren zum Verbinden der Gegenelektrode 120 mit der Pumpmembran können je nach verwendeten Ausgangsmaterialien beispielsweise Kleben bei beliebigen Materialien, anodisches Bonden bei Silizium-Glas- oder Silizium-Silizium-Verbindungen mit Glas-Abstandsschicht, oder ein Silicon-Fusion-Bonden bei einer Silizium-Silizium-Verbindung eingesetzt werden. Um ein Verbindungsverfahren zu ermöglichen, bei dem eine Temperaturerhöhung notwendig ist, beispielsweise bei einem anodischen Bonden, werden bei dem elektrostatischen Aktor in der Gegenelektrode 120 Öffnungen 144 angebracht, die bei temperaturbedingter Ausdehnung und Kompression des Gasvolumens zwischen Pumpmembran 122 und Gegenelektrode 120 einen Druckausgleich zur Umgebung ermöglichen. In gleicher Weise können diese Öffnungen in der Abstandsschicht 140 angeordnet sein.

Fig. 5 zeigt einen piezoelektrischen Mikropumpenantrieb, der mit einem Pumpenkörper, der gemäß dem erfindungsgemäßen Verfahren hergestellt wurde, verbunden werden kann, um eine Mikromembranpumpe zu bilden. Eine Pumpmembran 110 weist Befestigungsstrukturen 150 zur Anbringung der Membran 110 an einem Pumpenkörper auf. Die Befestigungsstrukturen und die Membran sind auf der von dem Pumpenkörper abgewandten Seite mit einer elektrisch leitenden Schicht 152 überzogen. Mittels einer Verbindungsschicht 154 ist ein piezoaktives Material 156 an der Membran 110 angebracht. Das piezoaktive Material 156 ist ebenfalls mit einer leitfähigen Schicht 158 überzogen.

Im folgenden werden kurz Verfahren zur Herstellung des piezoelektrischen Aktors beschrieben. Zunächst wird die dünne Pumpmembran 110 gebildet, wobei innerhalb der Pumpkammer Strukturen vorgesehen werden müssen, die später eine optimale Strömung zwischen Einlaßventil und Auslaßventil gewährleisten. Die Unterseite der Pumpmembran kann ferner weitergehend strukturiert werden, beispielsweise durch die Herstellung zusätzlicher Hilfstrukturen in der Form von Abstandhaltern und Strömungskanälen. Ferner können nachträglich Beschichtungen aufgebracht oder entfernt werden. Wiederum gehört dazu das Aufbringen von zusätzlichen Schichten zur Erhöhung der chemischen Beständigkeit, zur elektrischen Isolation oder zur gezielten Einstellung mechanischer Eigenschaften, beispielsweise einer lokal unterschiedlichen Membrandicke zur Erzielung einer lokal inhomogenen Elastizität.

Im Anschluß wird die Pumpmembran 110 mit einem piezoelektrischen Material 156 verbunden. Das piezoelektrische Material kann in der Form eines Kristalls vorliegen oder alternativ in der Form einer dünnen Schicht 156 direkt auf die Pumpmembran 110 aufgebracht werden. Beide Seiten des Piezomaterials müssen dabei elektrisch kontaktierbar sein, wobei eine nichtleitende Schicht 154 als Verbindung zwischen Piezounterseite und elektrisch leitender Pumpmembran 110, z.B. eine Klebeschicht, zugelassen werden kann, da für die Umsetzung des Piezoeffekts ein elektrisches Feld entscheidend ist.

Werden zur Herstellung des piezoelektrischen Antriebs ebenfalls Verbindungsverfahren, die eine Temperaturerhöhung notwendig machen, eingesetzt, muß das Piezomaterial 156 nach diesen Verfahren unter Umständen wieder nachpolarisiert werden. Dabei muß eine hohe elektrische Spannung an den Kristall angelegt werden, wobei das Material eine Temperatur haben sollte, die ungefähr der Curietemperatur des Aktormaterials entspricht, typischerweise 180°C-350°C.

Zum Bilden einer Mikromembranpumpe werden die bezugnehmend auf die Fig. 4 und 5 beschriebenen Aktorvorrichtungen auf einem gemäß dem erfindungsgemäßen Verfahren hergestellten Pumpenkörper angebracht, wodurch eine Mikromembranpumpe, wie sie vorher bezugnehmend auf die Fig. 2 und 3 beschrieben wurde, erzeugt wird. Zur Verbindung der Aktorvorrichtung auf dem Pumpenkörper können beliebige in der Technik bekannte Verfahren verwendet werden.

Im folgenden werden nun die erfindungsgemäßen Verfahren zur Herstellung eines Pumpenkörpers, der für die erfindungsgemäße Mikromembranpumpe geeignet ist, näher beschrieben.

Vorzugsweise wird als Ausgangsmaterial der Ventileinheit Silizium verwendet. Wie oben beschrieben, ermöglicht die erfindungsgemäße Herstellung des Pumpenkörpers mit der integrierten Ventileinheit ein geringes Pumpkammervolumen. Dies gilt insbesondere für den innenliegenden Ventilchip, der zum Pumpkammervolumen beiträgt. Es ist jedoch offensichtlich, daß die vorliegende Erfindung auch ein vorteilhaftes Verfahren zum Bilden eines Pumpenkörpers, wie er beispielsweise in Fig. 1 gezeigt ist, liefert. Es ist daher für Fachleute offensichtlich, daß die bei den jeweiligen Ausführungsbeispielen des erfindungsgemäßen Verfahrens beschriebenen Schritte des Dünnens von einem oder beiden den Ventilkörper bildenden Halbleiterplatten optional sind.

Ein erstes Verfahren wird nun bezugnehmend auf Fig. 6 beschrieben. Der Ventilkörper mit der integrierten Ventilstruktur wird dabei aus zwei Halbleiterplatten, vorzugsweise Siliziumplatten, gebildet, die zunächst in den Schritten a) - c) einer gleichartigen Behandlung unterworfen werden.

Zunächst werden die Ventilchips 200 auf ihrer Vorderseite, d.h. auf einer Hauptoberfläche desselben, beispielsweise durch ein Ätzverfahren vorstrukturiert, um eine Ventilklappenstruktur 202 und eine Ventilsitzstruktur 204 festzulegen. Diese Vorstrukturierung ist in einem Schritt a) in Fig. 6 dargestellt. In einem nächsten Schritt werden beispielsweise durch naßchemische Ätzverfahren bei dem dargestellten Ausführungsbeispiel des erfindungsgemäßen Verfahrens Ventilklappenwannen 206 und Ventilöffnungswannen 208 von der Rückseite der Chips her in einer vorbestimmten Beziehung zu den Ventilklappenstrukturen 202 und den Ventilsitzstrukturen 204 gebildet, siehe Schritt b). Nachfolgend werden die Ventilchips 200 bei diesem Ausführungsbeispiel auf der Oberseite mit einer Oxidschicht 210 überzogen, Schritt c).

Im Anschluß werden die beiden Chips beispielsweise durch anodische Bondverfahren oder durch ein Silicon-Fusion-Bonden an den mit der Oxidschicht überzogenen Oberflächen derselben verbunden, siehe Schritt d). Die beiden Chips sind dabei derart angeordnet, daß die Ventilsitzstrukturen des einen Chips mit den Ventilklappenstrukturen des anderen Chips ausgerichtet sind und umgekehrt. Dies führt zu einer Verbindung der Ventilklappen mit dem Ventilsitz und somit zu einer mechanischen Stabilisierung, die beim nachfolgenden Dünnungsprozeß eine Beschädigung der Ventilklappen zuverlässig verhindert.

Das nach dem Schritt d) erhaltene Waferpaar 212 wird anschließend einseitig gedünnt, siehe oberen Wafer in Schritt e), wodurch die Ventilwannen 206, 208 des gedünnten Wafers möglichst flach herausgebildet werden sollen. Nachfolgend wird ein abschließender naßchemischer Ätzprozeß durchgeführt, der zum Freilegen der Klappenstrukturen bzw. zum Öffnen der Ventilsitze führt, siehe Schritt f). Somit ist das erfindungsgemäße Verfahren zur Herstellung des erfindungsgemäßen Pumpenkörpers mit integrierter Ventilstruktur abgeschlossen.

Bezugnehmend auf Fig. 7 wird nachfolgend ein alternatives Verfahren beschrieben. Zunächst werden wie im Schritt a) in Fig. 6 in einer Hauptoberfläche der Ventilchips 200 Ventilsitzstrukturen 204 und Ventilklappenstrukturen 202 definiert. Nachfolgend werden in einem Schritt g) auf der Rückseite der Chips Ventilklappenwannen 216 und Ventilöffnungswannen 218 erzeugt. Die Wannen weisen bei diesem Ausführungsbeispiel eine Wannentiefe auf, die der Wannentiefe des fertiggestellten Pumpenchips entspricht. Nach dieser Strukturierung werden die Ventilwafer wiederum verbunden, so daß eine Ventileinheit 222 gebildet wird, siehe Schritt h). Der wesentliche Unterschied zu dem bezugnehmend auf Fig. 6 beschriebenen Verfahren besteht in dem letzten Schritt, wobei das Abdünnen der Wafer bei dem in Fig. 7 dargestellten Verfahren nicht einseitig mechanisch erfolgt, sondern in einem Schritt i) beidseitig durch chemische Verfahren. Der chemische Ätzprozeß wird solange angewendet, bis die Klappen bzw. Ventilöffnungen freigelegt sind. Das Ergebnis ist ein Waferpaar, das aus zwei Wafern der gleichen Dicke besteht.

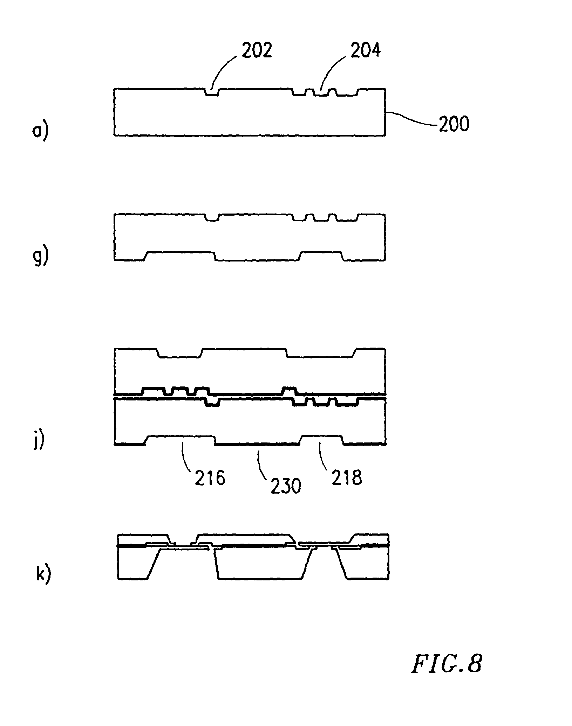

Ein weiteres alternatives Verfahren gemäß der vorliegenden Erfindung wird nachfolgend bezugnehmend auf Fig. 8 erläutert. Die in Fig. 8 dargestellten Schritte a) und g) entsprechen den in der Fig. 7 dargestellten Schritten a) und g). Anschließend werden die Ventilchips wiederum zu einer Ventileinheit verbunden, wie in einem Schritt j) dargestellt ist, wobei der Einlaß und der Auslaß in diesem Stadium noch geschlossen sind. Jedoch wird nun auf die Oberfläche des unteren Chips mit Ausnahme der strukturierten Wannen 216 und 218 eine Ätzmaske 230 aufgebracht. Somit wird in einem folgenden naßchemischen Ätzverfahren nur der obere Chip gedünnt, während nicht der gesamte untere Chip mitgedünnt wird, da die Maske 230 das Ätzen des gesamten Chips verhindert, so daß der untere Chip nur in den vorstrukturierten Wannen 216 und 218 geätzt wird und nach Fertigstellung der Struktur die ursprüngliche Dicke aufweist, siehe Schritt k). Man erhält somit ein Waferpaket, das nach dem Freilegen der Klappen eine zur Pumpkammer gerichtete planare Ventileinheit beinhaltet, wenn die Pumpkammer durch den Pumpkörper und eine auf dem oberen Chip angebrachte Mikromembran gebildet wird.

Der nach einem der oben beschriebenen Verfahren gefertigte Pumpenkörper kann nun mit einer Antriebseinheit verbunden werden. Eine kostengünstige und zugleich reproduzierbare Verbindungstechnik kann jedoch nur dann realisiert werden, wenn die Montage auf Wafer-Ebene stattfindet. Für diese Verbindung bietet sich wieder eine Vielzahl von Techniken und Verfahren an, beispielsweise Kleben, Silicon-Fusion-Bonden, anodisches Bonden und eutektisches Bonden. Hochtemperaturverfahren können wiederum mit einer Depolarisation des Piezomaterials verbunden sein und somit ein nachträgliches Polarisieren des Piezoaktors erfordern.

Nach dem Verbinden der Antriebseinheit mit dem Ventilkörper erhält man die in den Fig. 2 und 3 dargestellten Mikromembranpumpen, wobei die beschriebenen Verfahren Pumpenkörper ermöglichen, die zusammen mit den beschriebenen Antriebsvorrichtungen ein hohes Kompressionsverhältnis, d.h. ein hohes Verhältnis von verdrängtem Pumpvolumen und gesamtem Pumpkammervolumen, ermöglichen.

## Patentansprüche

1. Verfahren zum Herstellen eines Pumpenkörpers mit einer mit einem Einlaßventil (106) versehenen Einlaßöffnung und einer mit einem Auslaßventil (108) versehenen Auslaßöffnung mit folgenden Schritten:
1.1 Strukturieren jeweils einer ersten Hauptoberfläche einer ersten und zweiten Halbleiterscheibe (200) zur Festlegung einer Ventilklappenstruktur (202) des Einlaßventils und einer Ventilsitzstruktur (204) des Auslaßventils in der ersten Scheibe und einer Ventilklappenstruktur des Auslaßventils und einer Ventilsitzstruktur des Einlaßventils in der zweiten Scheibe;
1.2 Bilden jeweils einer Ventilklappenwannenstruktur (206; 216) und einer Ventilöffnungswannenstruktur (208; 218) in einer vorbestimmten Beziehung zu den Ventilklappenstrukturen und den Ventilsitzstrukturen in jeweils einer zweiten Hauptoberfläche der ersten und der zweiten Halbleiterscheibe;
1.3 Verbinden der ersten Hauptoberflächen der ersten und der zweiten Halbleiterscheibe, derart, daß die jeweils eine Ventilklappenstruktur zu einer Ventilsitzstruktur eine vorbestimmte Beziehung aufweist; und
1.4 Ätzen der jeweils zweiten Hauptoberfläche der ersten und der zweiten Halbleiterscheibe zumindest im Bereich der Ventilklappenwannenstruktur und der Ventilöffnungswannenstruktur zum Freilegen der Ventilklappen und zum Öffnen der Ventilsitze.

2. Verfahren gemäß Anspruch 1, das vor dem Schritt 1.3 den Schritt des Versehens der jeweils ersten Oberfläche der ersten und der zweiten Halbleiterscheibe mit einer Oxidschicht (210) aufweist.

3. Verfahren gemäß Anspruch 1 oder 2, bei dem die Halbleiterplatten (200) im Schritt 1.3 mittels eines anodischen Bondverfahrens verbunden werden.

4. Verfahren gemäß einem der Ansprüche 1 - 3, das vor dem Schritt 1.4 den Schritt des Dünnens zumindest einer der Halbleiterscheiben von der zweiten Oberfläche her aufweist.

5. Verfahren gemäß Anspruch 4, bei dem zumindest eine Halbleiterscheibe von der zweiten Oberfläche her mittels mechanischer Abtragverfahren gedünnt wird, wobei im Schritt 1.2 die Ventilklappenwannenstrukturen (206) und die Ventilsitzwannenstrukturen (208) in den Halbleiterplatten (200) derart tief ausgebildet werden, daß nach dem Dünnen der zumindest einen Halbleiterscheibe die Ventilklappenwannenstrukturen und die Ventilsitzwannenstrukturen die Tiefe aufweisen, die nach dem Schritt 1.4 die endgültigen Ventilwannen aufweisen.

6. Verfahren gemäß Anspruch 4, bei dem die Ventilklappenwannenstrukturen und die Ventilsitzwannenstrukturen im Schritt 1.2 in den Halbleiterplatten (200) mit der Tiefe ausgebildet werden, die nach dem Schritt 1.4 die endgültigen Ventilwannen aufweisen.

7. Verfahren gemäß Anspruch 6, bei dem beide Halbleiterplatten von der zweiten Oberfläche derselben her mittels chemischer Ätzverfahren gedünnt werden.

8. Verfahren gemäß Anspruch 6, bei dem nur eine Halbleiterplatte von der zweiten Oberfläche her mittels chemischer Ätzverfahren gedünnt wird, während die andere Halbleiterplatte auf der zweiten Hauptoberfläche derselben vor dem Dünnen der einen Halbleiterplatte mit einer Maske versehen wird, derart, daß dieselbe nur im Bereich der Ventilklappenwannenstruktur und im Bereich der Ventilsitzwannenstruktur geätzt wird.

9. Verfahren gemäß Anspruch 7 oder 8, bei dem das Dünnen der zumindest einen Halbleiterscheibe und das Ätzen im Schritt 1.4 in einem Prozeßschritt durchgeführt werden.

10. Verfahren gemäß einem der Ansprüche 1 - 9, bei dem als Halbleiterscheiben Siliziumscheiben verwendet werden.

11. Verfahren gemäß einem der Ansprüche 1 - 10, bei dem jeweils eine Vielzahl von Ventilklappenstrukturen und Ventilsitzstrukturen sowie Ventilklappenwannenstrukturen und Ventilsitzwannenstrukturen in der ersten und der zweiten Halbleiterscheibe gebildet werden, wobei die Halbleiterscheiben nach dem Schritt 1.4 vereinzelt werden, um einzelne Pumpenkörper zu bilden.

## Claims

1. A method of producing a pump body having an inlet opening provided with an inlet valve (106) and an outlet opening provided with an outlet valve (108), said method comprising the following steps:
1.1 structuring a respective first main surface of a first and of a second semiconductor disc (200) for defining a valve flap structure (202) of the inlet valve and a valve seat structure (204) of the outlet valve in the first disc and a valve flap structure of the outlet valve and a valve seat structure of the inlet valve in the second disc;
1.2 forming a valve flap well structure (206; 216) and a valve opening well structure (208; 218) in a predetermined relationship with the valve flap structures and the valve seat structures in a respective second main surface of the first and of the second semiconductor disc;
1.3 connecting the first main surfaces of said first and second semiconductor discs in such a way that the respective valve flap structure is arranged in a predetermined relationship with a respective valve seat structure;
1.4 etching the respective second main surface of said first and of said second semiconductor disc at least in the area of the valve flap well structure and of the valve opening well structure so as to expose the valve flaps and open the valve seats.

2. A method according to claim 1, comprising, prior to step 1.3, the step of providing the respective first surface of the first and of the second semiconductor disc with an oxide layer (210).

3. A method according to claim 1 or 2, wherein the semiconductor plates (200) are connected by means of an anodic bonding process in step 1.3.

4. A method according to one of the claims 1 to 3, comprising, prior to step 1.4, the step of thinning at least one of the semiconductor discs starting from the second surface.

5. A method according to claim 4, wherein at least one semiconductor disc is thinned starting from the second surface by means of mechanical removal methods, the valve flap well structures (206) and the valve seat well structures (208) being formed in step 1.2 in said semiconductor plates (200) with such a depth that after the thinning of the at least one semiconductor disc the valve flap well structures and the valve seat well structures have a depth corresponding to the depth of the final valve wells after step 1.4.

6. A method according to claim 4, wherein the valve flap well structures and the valve seat well structures are formed in step 1.2 in the semiconductor plates (200) with a depth corresponding to the depth of the final valve wells after step 1.4.

7. A method according to claim 6, wherein the two semiconductor plates are thinned starting from the second surface by means of chemical etching processes.

8. A method according to claim 6, wherein only one semiconductor plate is thinned starting from the second surface by means of chemical etching processes, whereas, prior to the thinning of said one semiconductor plate, the other semiconductor plate is provided with a mask on the second main surface surface thereof in such a way that said other semiconductor plate is etched only in the area of the valve flap well structure and in the area of the valve seat well structure.

9. A method according to claim 7 or 8, wherein the thinning of the at least one semiconductor disc and the etching in step 1.4 are carried out in one process step.

10. A method according to one of the claims 1 to 9, wherein silicon discs are used as semiconductor discs.

11. A method according to one of the claims 1 to 10, wherein a plurality of valve flap structures and valve seat structures and a plurality of valve flap well structures and valve flap seat structures are formed in each of said first and second semiconductor discs, the semiconductor discs being diced after step 1.4 so as to form individual pump bodies.

## Revendications

1. Procédé de production d'un corps de pompe avec une ouverture d'entrée munie d'une soupape d'entrée (106) et une ouverture de sortie munie d'une soupape de sortie (108), aux étapes suivantes consistant à:
1.1 structurer une première surface principale respectivement d'une première et d'une seconde plaquette semi-conductrice (200), pour déterminer une structure de clapet (202) de la soupape d'entrée et une structure de siège (204) de la soupape de sortie dans la première plaquette et une structure de clapet de la soupape de sortie et une structure de siège de la soupape d'entrée dans la seconde plaquette ;
1.2 former respectivement une structure de cuvette de clapet de soupape (206 ; 216) et une structure de cuvette d'ouverture de soupape (208 ; 218) selon un rapport prédéterminé avec les structures de clapet de soupape et les structures de siège de soupape dans une seconde surface principale de chacune de la première et de la seconde plaquette semi-conductrice ;
1.3 assembler les premières surfaces principales de la première et de la seconde plaquette semi-conductrice de telle sorte que chaque structure de clapet de soupape présente un rapport prédéterminé avec une structure de siège de soupape correspondante ;
1.4 graver chacune des secondes surfaces principales de la première et de la seconde plaquette semi-conductrice, au moins à l'endroit de la structure de cuvette de clapet de soupape et de la structure de cuvette d'ouverture de soupape, pour dégager les clapets de soupape et pour ouvrir les sièges de soupape.

2. Procédé suivant la revendication 1, présentant, avant l'étape 1.3, l'étape consistant à munir chacune des premières surfaces principales de la première et de la seconde plaquette semi-conductrice d'une couche d'oxyde (210).

3. Procédé suivant la revendication 1 ou 2, dans lequel les plaquettes semi-conductrices (200) sont assemblées, à l'étape 1.3, à l'aide d'un procédé d'assemblage anodique.

4. Procédé suivant l'une des revendications 1 à 3, présentant, avant l'étape 1.4, l'étape consistant à amincir au moins l'une des plaquettes semi-conductrices depuis la seconde surface principale.

5. Procédé suivant la revendication 4, dans lequel au moins une plaquette semi-conductrice est amincie, depuis la seconde surface, à l'aide d'un procédé d'enlèvement mécanique, les structures de cuvette de clapet de soupape (206) et les structures de cuvette de siège de soupape (208) dans les plaquettes semi-conductrices (200) étant formées, à l'étape 1.2, d'une profondeur telle qu'après l'amincissement de l'au moins une plaquette semi-conductrice, les structures de cuvette de clapet de soupape et les structures de cuvette de siège de soupape présentent la profondeur que présentent, après l'étape 1.4, les cuvettes de soupape définitives.

6. Procédé suivant la revendication 4, dans lequel les structures de cuvette de clapet de soupape et les structures de cuvette de siège de soupape sont réalisées, à l'étape 1.2, dans les plaquettes semi-conductrices (200) avec la profondeur que présentent, après l'étape 1.4, les cuvettes de soupape définitives.

7. Procédé suivant la revendication 6, dans lequel les deux plaquettes semi-conductrices sont amincies, depuis la seconde surface de celles-ci, à l'aide d'un procédé de gravure chimique.

8. Procédé suivant la revendication 6, dans lequel seule une plaquette semi-conductrice est amincie, depuis la seconde surface, à l'aide d'un procédé de gravure chimique, tandis que l'autre plaquette semi-conductrice est, sur la seconde surface de celle-ci, avant l'amincissement de l'une plaquette semi-conductrice, munie d'un masque de sorte qu'elle n'est gravée qu'à l'endroit de la structure de cuvette de clapet de soupape et à l'endroit de la structure de cuvette de siège de soupape.

9. Procédé suivant la revendication 7 ou 8, dans lequel l'amincissement de l'au moins une plaquette semi-conductrice et la gravure à l'étape 1.4 sont réalisées en une étape de procédé.

10. Procédé suivant l'une des revendications 1 à 9, dans lequel sont utilisées, comme plaquettes semi-conductrices, des plaquettes en silicium.

11. Procédé suivant l'une des revendications 1 à 10, dans lequel une pluralité de structures de clapet de soupape et de structures de siège de soupape ainsi que de structures de cuvettte de clapet de soupape et de structures de cuvettte de siège de soupape sont formées dans chacune des première et seconde plaquettes semi-conductrices, les plaquettes semi-conductrices étant séparées après l'étape 1.4, pour former des corps de pompe individuels.
